# EUROPEAN PATENT APPLICATION

(11) **EP 2 802 092 A1**
(43) Date of publication of application: **12.11.2014**
(21) Application number: 13166712.3
(22) Date of filing: 06.05.2013
(51) Int. Cl.: H04B 13/02

(54) **System and method for seafloor exploration**

(71) Applicant: ATLAS ELEKTRONIK GmbH, 28309 Bremen (DE)
(72) Inventor: Juckenhöfel, Oliver, 28359 Bremen (DE); Kalwa, Jörg, 28844 Weyhe (DE)
(74) Representative: Lecomte & Partners

(57) **Abstract**

The present application is directed to a system for exploring the seafloor, comprising a plurality of docks (3) installable on the seafloor, each dock (3) comprising a first communication interface (11) and a supply interface (13) for providing fuel or energy. Further, the system (1) comprises a plurality of buoys (7) wherein each dock (3) of at least two docks (3) of the plurality of docks (3) is associated with one buoy (7) anchorable to that dock (3). According to the invention, each buoy (7) comprises a signal line (17) for connecting the buoy (7) to the dock (3) to which it is anchored and a signal antenna for sending and receiving information, and wherein each buoy (7) is adapted to send information received from the dock (3) via the signal line (17) by means of the signal antenna and adapted to send information received via the signal antenna to the dock (3) by means of the signal line (17). Still in accordance with the present invention, the system (1) comprises an unmanned underwater vehicle (5) for monitoring the sea and/or the seafloor, the vehicle (5) comprising a second communication interface adapted to exchange information with the first communication interface (11) of each dock (3), and a refueling interface adapted to receive fuel or energy from the supply interface (13) of each dock (3). Finally, the present invention is also directed to a corresponding method of exploring the seafloor.

## Description

### Field of the invention

The present invention is directed to a system and a method for sea and/or seafloor exploration or monitoring, in particular for unmanned seafloor exploration or monitoring.

### Background of the invention

Recent developments in modern unmanned underwater vehicle (UUV) technology opens a range of opportunities and new applications related to underwater operation.

Usually such UUVs are launched from a harbor or, more typically, from a ship in order to investigate the sea area around its launch point. After performing a single exploration mission, the UUV is recovered and brought back on board of the ship.

Since UUVs are unmanned and exclude the complexity of bringing men to hostile environment, UUV systems are significantly cheaper than manned submarines.

However, it would be desirable to investigate or explore larger sea areas, especially large areas of the seafloor.

Such investigations would be of particular interest not just in shallow water with a limited range of operation but also in deep-sea areas or larger areas with a longer mission time.

One object of the present invention is thus to provide a system which solves at least one of the above mentioned disadvantages.

In particular, it is an object of the present invention to provide a system which allows at least one of: exploration of deep-sea areas, exploration of the sea-floor or sea with an increased operational range and exploration of the sea-floor or sea with an increased mission time.

Another object of the present invention may be to provide a system which may operate autonomously and on a cost effective basis.

### Summary of the invention

The above object is solved by the features of the present invention according to appended claim 1.

Thus, the present invention may be directed to a system for exploring the sea and/or seafloor, comprising a plurality of (underwater) docks installable on the seafloor. Each (unmanned) dock may comprise a first communication interface for exchanging data or information and a supply interface for providing fuel or energy to an underwater vehicle. Further, the system comprises a plurality of buoys, wherein each dock may be associated with one of the buoys anchorable to that dock. Still in accordance with the present invention, the system comprises a signal line for connecting a buoy to its associated dock wherein each buoy has a signal antenna for sending and receiving information and is adapted to send information received from the dock via the signal line by means of the signal antenna and is adapted to send or transmit information received via the signal antenna to the dock by means of the signal line. Moreover, the system comprises an unmanned underwater vehicle (UUV) for monitoring the sea and/or the seafloor, comprising a second communication interface adapted to exchange information with the first communication interface of each dock and a refueling interface adapted to receive fuel or energy from the supply interface of each dock.

Providing the above system comprising a plurality of docks allows for instance an extended range of the UUV travelling between the docks installed on the seafloor. Further, connecting each dock with an associated buoy allows communication of the docks with one another and also transmission of information, collected by the UUV and transmitted to the docks by means of the communication interface, to other docks or to another receiver, as e.g. a ship or shore based information or control centre.

In particular, the system allows extended seafloor or seabed exploration or investigation and also long time environmental monitoring of the sea. According to a preferred aspect of the invention, one possible application could be the exploration or monitoring of minerals or rock formations on the seafloor or the supervision of mining activities on the seafloor. An example may include the observation or monitoring of manganese fields such as observed in the Pacific Ocean as well as monitoring environmental changes, e.g. due to mining of such manganese fields with fabrics. Also, a support of mining activities can be given by e.g. regular inspection of fabrics or underwater processing facilities which may also be optional elements of the system described herein.

Further, the system may help to survey operations in ecologically sensitive environment and allows virtual and/or remote human access to such environment.

According to a further preferred aspect of the invention, the described system could be used for exploration, environmental monitoring and/or installation inspection of underwater installations such as pre-salt, oil and gas reservoirs. Such installations may also be elements of the system.

According to a further preferred aspect of the invention, the system can also be applied in shallow waters, e.g. on depths of less than 200 m, in particular less than 100 m. For example, the system might be used under ice as for instance below the arctic ice. However, preferably the system may be applied to the deep sea or in other words in depths of more than 500 m or preferably more than 800 m. Thus, unmanned docks may be installed or positioned on the seafloor of the deep sea in the above mentioned depths.

For instance a dock may have a maximum diameter of less than 20 m, preferably of less than 15 m, such that it may be transported by a truck, although larger docks may be possible. Further, the dock may have an outer contour (or shape / size) of a standard shipping container such that it may be easily transported by a truck, train and ship.

According to another preferred aspect of the present invention, the system may further comprise a processing unit for calculating a course of the unmanned underwater vehicle between at least two of the docks and/or for processing information received from the unmanned underwater vehicle via the first communication interface or from the associated buoy via the signal line.

According to another preferred aspect of the present invention, at least one of the docks, the buoys and the unmanned underwater vehicle comprises a beacon for indicating its position. Additionally or alternatively, at least one of the docks, the buoys or the unmanned underwater vehicle comprises a sonar or camera for surveying its surrounding sea area. Such equipment may for instance allow for an autonomous docking or approaching maneuver between the unmanned underwater vehicle and a dock. Further, such features may facilitate or improve navigation of the unmanned underwater vehicle between two docks.

According to another preferred aspect of the present invention, at least one dock or the unmanned water vehicle comprises an umbilical unit for connecting the supply interface of the dock with the refueling interface of the unmanned underwater vehicle and/or for connecting the first communication interface of the dock with the second communication interface of the unmanned underwater vehicle. In particular, the umbilical unit may comprise a robotic arm. The umbilical unit may provide secure refueling of the unmanned underwater vehicle and a reliable information exchange between the latter and the dock.

According to another preferred aspect of the present invention, at least one of the docks is a tracked vehicle for driving on the seafloor or a ground vehicle having wheels or legs (or any other means) for moving on the seafloor. Thus, the dock may have a fixed position on the seafloor but may also autonomously drive to another position if required, e.g. if another area is to be monitored by the system.

According to another preferred aspect of the present invention, the docks are non-driven or stationary vessels.

According to a preferred aspect of the invention, the dock comprises a fuel supply for supplying fuel to the supply interface or a fuel cell for generating electrical energy and supplying the electrical energy to the supply interface. Alternatively or in addition, the supply interface may comprise a mechanical axle for providing mechanical (rotational) energy to the UUV which may comprise a generator for converting that mechanical energy to electrical energy and preferably for recharging a battery.

According to another preferred aspect of the present invention, the system further comprises an information and/or control centre. Such a centre may be based on a ship, a submarine, a plane, on land or an artificial island.

Buoys may be adapted to send information to the information or control centre via one of their signal antennas and may receive information from said centre via such an antenna, preferably via a satellite link.

According to another preferred aspect of the present invention, a first buoy associated with a first dock is adapted to send information to a second buoy associated with a second dock (which is adapted to receive such information), and vice versa, so that the first dock and the second dock may exchange information via the first and second buoys. Such a configuration increases further the degree of autonomous operation.

Moreover, the present invention is also directed to a method for exploring the sea and/or the seafloor, preferably with the system according to one of the preferred aspects of the invention. The method comprises one or more of the following steps: Providing a plurality of underwater docks on the seafloor; anchoring to each dock a buoy swimming above the dock; connecting each buoy, for example via a signal line, with the dock to which it is anchored; providing at least one unmanned underwater vehicle; monitoring the seafloor with the unmanned underwater vehicle; recharging or refueling the unmanned underwater vehicle via one of the docks; and transferring information monitored by the unmanned underwater vehicle to said dock.

According to another preferred aspect of the present invention, the method may further comprise the step of transferring information between the buoy associated with said dock to said dock and from there to the unmanned underwater vehicle, wherein said information preferably comprises navigation information for navigating the unmanned underwater vehicle.

According to another preferred aspect of the present invention, the method may further comprise the step of transferring information monitored by the unmanned underwater vehicle from said dock to the buoy anchored to said dock and transmitting said information to an information or control centre.

According to another preferred aspect of the present invention, the method may further comprise the step of positioning two docks in a distance which is at least 10 %, preferably 25 % smaller than the maximum traveling range of the unmanned underwater vehicle; and/or positioning each dock such that its distance to at least one further dock is at least 10 %, preferably 25 % smaller than the maximum traveling range of the unmanned underwater vehicle.

According to another preferred aspect of the present invention, the unmanned underwater vehicle is connected via a communication line with a dock and is remote controllable by a control centre sending navigation information to a buoy anchored to that dock and connected to that dock via a signal line.

According to another preferred aspect of the present invention, the unmanned underwater vehicle approaches the dock autonomously by indicating the position of either one of the buoy and the dock or the unmanned underwater vehicle with a beacon or other transponder (or other relocation device) and detecting a position signal of said transponder by a corresponding receiver provided either on the unmanned underwater vehicle if the dock or the buoy are equipped with the transponder, or on the dock or buoy if the unmanned underwater vehicle is provided with the transponder.

According to another preferred aspect of the present invention, the unmanned underwater vehicle travels between two docks in a meander path and/or in essentially parallel lines to monitor the seafloor. The area covered by the path of the unmanned underwater vehicle between two docks may have an essentially rectangular shape and/or may have multiple square nautical miles, e.g. between 5 and 100, preferably between 10 and 50 square nautical miles.

According to another preferred aspect of the present invention, at least five docks are installed on the seafloor in an essentially cross-shaped configuration with four docks being positioned at the corners of the cross shape and the fifth dock positioned essentially in the centre of the cross shape. The docks and/or their associated buoys may also be described as nodes of a grid. The unmanned underwater vehicle may travel between such nodes.

The present invention may also be directed to a method for exploring the seafloor comprising one or more steps of: Providing a grid of multiple nodes, each node comprising an underwater dock and a buoy anchored to said dock and swimming above said dock; providing an unmanned underwater vehicle; monitoring the sea and/or seafloor with the unmanned underwater vehicle; arranging or positioning the nodes such that each node has an adjacent or neighboring node whose distance from said node is less than the maximum traveling range of the unmanned underwater vehicle. This method may also comprise one or more steps or features as described in relation to the aforementioned method and its preferred aspects.

Moreover, all features of the above described aspects of the invention may be combined or replaced with one another.

### Brief description of the drawings

In the following, the Figures according to the embodiments of the present invention are briefly described. Further details are given in the detailed description of the embodiments. The Figures have the purpose of illustrating the invention and should not be understood in a limiting sense.
- Figure 1: depicts a schematic perspective representation of a system in accordance with an embodiment of the present invention; and
- Figure 2: depicts schematically an example of using a system according to an embodiment of the present invention for sea and/or seafloor exploration.

### Detailed description of the embodiments

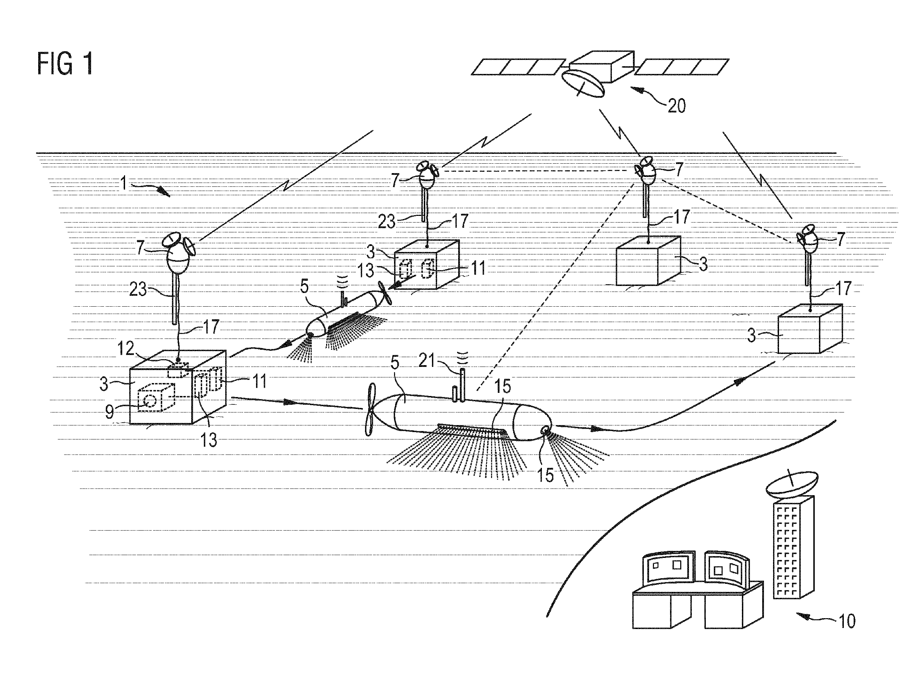

Figure 1 discloses an exemplary perspective view of a system 1 according to a preferred embodiment of the present invention.

The system comprises a plurality of docks 3 installed on the seafloor. Each dock 3 may be connected with a buoy 7 via a signal line. Preferably, the respective buoy 7 swims above the associated dock 3 on the water surface and is anchored to that dock 3. However, not all of the docks 3 must have an associated buoy 7. The buoys 7 are preferably equipped with at least one antenna for communication purposes. Further, the system comprises one or more unmanned underwater vehicles (UUV) 5 or in particular autonomous underwater vehicles (AUV) 5 or remotely operated underwater vehicles (ROV) 5 which may travel between the docks 3. The docks 3 and the UUV 5 may be equipped with communication interfaces for exchanging information, in particular information monitored or obtained by the UUV 5. In addition, the docks 3 and the UUV 5 may also comprise energy or fuel exchange interfaces for providing the UUV 5 with driving energy or fuel.

Possible configurations of one or more docks 3, one or more buoys 7 or one or more UUV 5, as shown in Figure 1, for example, are described in the following.

### DOCKS

As shown in the example depicted in Figure 1, an unmanned dock 3 may be a vessel or body which is placeable on the seafloor. Preferably, the dock 3 may have an overall density allowing the dock 3 to sink to the seafloor 5. If desired the dock 3 could be additionally anchored to the seafloor. According to the described embodiment, the dock 3 comprises a communication or information exchange interface 11 for exchanging information with one or more of the UUV 5, and a supply interface 13 for providing one or more UUV 5 with driving energy or fuel. For that purpose, the dock 3 may also comprise a fuel or energy supply 9. Optionally, the dock 3 may also comprise a processing unit or system 12 which may be used to process information provided or collected by a UUV 5 and/or transferred via the communication interface 11 to the dock 3.

Information transferred to the dock 3 via the communication interface 11 or stored or processed in the processing unit 12 may be transmitted via the signal line 17 to a buoy 7 anchored or associated to the dock 3. Further, the dock 3 and, in particular, the processing unit 12 may receive information from the buoy 7 via the signal line 17. Such information could also be stored and/or processed in the dock 3 as e.g. by means of the processing unit 12. Further, such information could be transferred to one or more UUV 5, especially via the communication interface 11. Connection via the communication interface 11 could be established via a plug and socket connection with a UUV 5 and/or by acoustic underwater communication, by underwater radio frequency transmission or light signaling.

The information exchanged or transmitted between the UUV 5 and the dock 3 could comprise but is not limited to one or more of sensor, acoustic, video, image and temperature data and/or navigation information. For example, the dock 3 may provide a UUV 5 with navigation information or a planned course. Such information related to the navigation or course of a UUV5 could be provided by the processing unit 12 of the dock 3 and may be received via the signal line 17. Alternatively, either the dock 3 or the UUV 5 may have such information stored without any need of information transfer.

Although the dock 3 is depicted as a non-driven or stationary vessel or body, a dock 3 may also be a tracked vehicle for driving on the seafloor or a ground vehicle having wheels for driving on the seafloor. Such a dock 3 may also be anchorable to the seafloor to obtain a fixed position. Further, the shape of a dock 3 is not limited to a box shape. The dock 3 may for instance also be provided as or may comprise a platform or a frame allowing an UUV 5 to touch down on the dock 3. Further, the communication interface 11, the fuel or energy supply 9, the supply interface 13 and the processing unit 12 do not need to be incorporated into a housing of the dock 3 and do not need to be integral components of the dock 3. However, preferably the dock 3 has housing incorporating the communication interface 11, the fuel or energy supply 9, the supply interface 13 and the processing unit 12. Further, the dock 3 may provide shelter for a docked UUV 5 by comprising a preferably closeable garage for the UUV 5

The dock 3 is preferably adapted to provide energy or fuel, in particular to the UUV 5. Thus, the dock 3 may comprise a fuel supply or tank 9 comprising e.g. diesel or other combustion fuel. Alternatively or in addition, the dock 3 may comprise a fuel cell for generating electrical energy. Electrical energy could be transferred directly via the supply or energy exchange interface 13 to a UUV 5 and/or provided to an electromotor of the dock 3 for generating mechanical energy (which might also be transferred to a UUV 5). In case of using a fuel cell, the dock 3 may comprise a hydrogen tank 9. If desired, one or more of the docks 3 could also receive electrical power via an undersea cable (installed on the seafloor).

Optionally, the dock 3 may also comprise an umbilical unit (not depicted in Figure 1) and/or a robotic arm. The umbilical unit may comprise the communication interface 11 and the supply interface 13 to be connected to a UUV 5. This may facilitate refueling or information exchange between the dock 3 and an UUV 5. In particular, the UUV 5 does not need to touch or contact the housing of the dock 3 which might increase the risk of a collision. Alternatively or in addition, the communication interface 11 may exchange information wirelessly if the UUV is in vicinity of the interface (e.g. less than 1 m away). The same applies to refueling or recharging of the UUV 5. Electrical energy could be provided to the UUV 5 via an inductive energy transfer. In that case, the UUV 5 is preferably provided less than 0.5 m from the supply interface 13. The umbilical unit could also be used to transfer (physical) specimens or samples collected by the UUV 5. Such samples could for example be rock pieces or biological samples.

The umbilical unit, including preferably a robotic arm, may also serve for anchoring the UUV 5 to the dock 3. Further, the umbilical unit may comprise data transfer lines, as e.g. one or more fiber glass cables to be connected to the UUV 5 or a fuel line. Another possibility consists in providing a mechanical axle via the umbilical unit, e.g. for mechanically driving or powering a generator of the UUV 5. Of course, the umbilical unit may also comprise an electrical power line for providing the UUV 5 with electrical energy. Preferably, such electrical energy is used for recharging batteries of the UUV 5.

In order to further facilitate docking operations, the dock 3 and/or the UUV 5 may be equipped with cameras. Alternatively or in addition the dock 3 and/or the UUV 5 may be equipped with a beacon 21 or other appropriate intercept devices or transponders. Beacons as such are known in the art. In particular, a beacon 21 sends position information which facilitates localization of the vessel 3, 5 to which it is attached.

In general, the dock 3 may be autonomously approached by a UUV 5 of the system 1. Moreover, the UUV 5 may autonomously exchange information with the dock 3 via the communication interface 11 and may be refueled or provided with mechanical or electrical energy via the supply system 13. The UUV 5 may preferably update its navigation or position data via information received from the dock 3 by means of the communication interface 11.

In summary, the plurality of docks 3 provides a standardized system usable for information exchange and refueling of the UUV 5 and thus extending the operation radius or range of the UUV 5.

### BUOYS

As described already above, each dock 3 of at least two docks 3 is associated with at least one unmanned buoy 7. In other words, a dock 3 is connected via a signal line 17 with a buoy 7. The signal line 17 could also be used to anchor the buoy 7 to its dock 3. Alternatively, the buoy 7 could be mechanically secured to the dock 3 via a rope, wire, chain or any suitable connection means.

Preferably, the buoy 7 swims on the water surface. Alternatively, a buoy 7 could swim near the water surface but under water as for instance less than 5 m or preferably less than 1 m below the water surface. Such depth adaption could be achieved by a buoyancy system for controlling and (actively) adapting the buoyancy of the buoy 7. Keeping the buoy 7 below the water surface may avoid detection of the buoy 7, in particular by thieves or pirates.

Preferably, a buoy 7 allows for communication with the environment or external entities and comprises one or more antennas. Such antennas could involve one or more radio antennas, acoustic underwater antennas 23, underwater antenna arrays 23, satellite antennas, AIS transceivers and/or GPS antennas. The buoy 7 may be equipped with WLAN and/or an RF transmitter/receiver, for instance in order to allow communication and data transfer with other buoys 7 of the system 1 or with other naval vessels as ships or surfaced submarines. The buoys 7 may also comprise a GNSS and/or WAAS receiver/transmitter, for example to define the position of the buoy 7 and/or to provide an unambiguous system time. For example, one buoy 7 could be equipped with a WLAN antenna, a satellite antenna and an acoustic underwater antenna.

By indicating the position of a buoy 7, the position of the dock 3 associated with the buoy 3 is also defined.

Antennas could for example be used for communication of a buoy 7 (optionally via a satellite 20) with a sea vessel or a land-based control information or control centre 10, as also depicted in the example of Figure 1. As the data and information collected by the system 1 may be transferred to a shore based information and control center 10, a vessel in the proximity of the installation is not required for the operation of the system 1. This will allow operation of the system 1 without exposing a crew to either expensive or dangerous environment which might be of particular advantage for long term or permanent operation.

A satellite antenna may send and receive information, for example navigation or position information, information collected by an unmanned underwater vehicle 5 or stored in a dock 3.

A buoy 7 can also be equipped with a sonar system, e.g. with a (vertical) sonar array 23 that is linked to the buoy's 7 nadir and hangs in the water. Sonar information may be used to monitor the water surrounding the buoy 7 if needed to full ocean depth.

The buoys 7 may also be equipped with navigation beacons that allow and facilitate the localization, positioning, and/or navigation of UUV 5 between the docks 3 of the system 1. Such beacons may be preferably submerged in the water.

Further, the buoys 7 may be equipped with a data processing and/or a data storage device. However, data processing and or storing could also be carried out by data processing unit 12 provided in an associated dock 3. Preferably, a buoy 7 has also an electrical connection to the associated dock 3 in order to be supplied with electrical energy by the dock 3. However, the buoy 7 could also have a power supply independent from the associated dock 3, e.g. a battery (optionally rechargeable via solar cells), a fuel cell or a combustion engine together with corresponding fuel storage. Alternatively or in addition, buoys 7 may have solar cells and/or wind energy devices and/or wave energy devices generating electrical energy which may be provided via an electrical power line to the associated dock 3.

The dock 3 may exchange any type of information with the buoy 7. On the one hand, information transmitted from the dock 3 to the buoy 7 may comprise for example information received from the UUV 5 via the communication interface 11. Such information may be processed before by the processing unit 11. Further, the buoy 7 may receive information stored in the processing unit 11 of the dock 3. On the other hand, information transmitted from the buoy 7 to the dock may comprise information to be transmitted from the dock 3 to the UUV 5 as described already above. Further, the information may comprise remote control commands received via one or more of the antennas or information received by one or more sonars or sonar arrays 23 and/or information received by other communication means with which the buoy 7 is equipped as e.g. WLAN.

Buoys 7 may also comprise acoustic transmitters adapted to send data to an UUV 5. Such data could comprise position information of the buoys 7 or docks 3 and or navigation information or commands for the navigation/course of the UUV 5.

### UNMANNED UNDERWATER VEHICLE (UUV)

As depicted in Figure 1, a UUV 5 may travel from a first dock 3 to a second dock 3 and from the second dock 3 to a further dock 3. Thus, the effective range of the UUV 5 or area coverable by an UUV 5 is extended by the provision of multiple docks 3.

The UUV 5 preferably comprises monitoring means 15 for monitoring the water/sea and/or the seafloor. Such means could include but are not limited to optical monitoring means as a video camera adapted to record videos or images. Other monitoring means 15 may include sonars or other acoustic transmitters/receivers. In particular, the UUV 5 could comprise one or more echosounders 15 or especially one or more multibeam echosounders 15. Echosounders as such are known to the person skilled in the art. Optionally, a UUV 5 may also comprise a robotic arm adapted to collect samples (e.g. rock or biological samples) from the seafloor. Further, the UUV 5 may also comprise one or more further sensors as e.g. temperature sensors, pressure sensors and/or flow velocity sensors.

UUV 5 or docks 3 may comprise further sampling and/or analysis devices for analyzing such collected samples. Analysis devices may for example include spectroscopic measurement devices.

All information or data collected, measured or monitored by an UUV 5 can be transmitted to a dock 3 via a communication interface of the UUV 5 adapted to communicate with the communication interface 11 of the dock 3. In other words, the UUV's communication interface matches the interface 11 of any dock 3. Preferably, all information or data collected by the UUV 5 is mapped with time and position data. Mapping could be carried out by the UUV 5 itself or the dock 3. Alternatively, mapping can also be achieved based on picture processing (without geo data). In case of collaborative operation of several UUV 5, a data exchange between multiple UUV 5 is possible. Such exchange could be established by multiple UUV 5 connected to each other and/or via the communication interface 11 with the same dock 3, or for instance, by acoustic transmission from a first UUV 5 to a second UUV 5 via an acoustic transmitter/receiver. In other words, the system may be described as a communication network.

Any UUV 5 may be equipped with a drive energy storage as e.g. a rechargeable battery. Alternatively, the UUV 5 could comprise a fuel tank and a combustion motor, preferably in an air independent setup. It is emphasized that elements necessary for the operation of a UUV 5 are known to the person skilled in the art so that such elements are not listed here in their entirety. The UUV 5 may also comprise a generator and a battery wherein the generator could be powered by a combustion engine or by a drive axle provided by a dock 3 as described above.

As also mentioned above, either the UUV 5 or the dock 3 may comprise an umbilical unit comprising preferably a robotic arm. In particular, an umbilical unit may be used to establish a mechanical, electrical, supporting and/or information exchange link between a dock 3 and a UUV 5. The umbilical unit may carry the communication unit or interface of the UUV 5 for contacting the communication interface 11 of a dock 3.

Although not necessary, the UUV 5 may be connected via a communication line or cable (not depicted) with a dock 3, in particular with the communication interface 11. Such a communication line may comprise for example a glass fiber cable. Such a link allows real time / online connection of the UUV's operation with the dock 3. In consequence, such a communication line may also allow remote control of the UUV 5 from a control centre 10 via a satellite link with a buoy 7 in connection with the associated dock 3. However, data transfer between the UUV 5 and a dock 3 may also be carried out wirelessly, for example via acoustic signals.

A UUV 5 may also comprise a signal generator, transponder or beacon 21 for sending signals indicative of the UUV's position. Such signals could be detected by a dock 3 or buoy 7 such that the dock 3 and/or buoy 7 is informed of the UUV'S position. As mentioned already above, each dock 3 and/or each buoy 7 may be equipped with an acoustic antenna or sonar. The described signal generators, transponders and beacons 21 may also be used for controlling the approach of the UUV 5 to the dock 3, e.g. for refueling or data exchange purposes. Further, they may be suitable to locate the UUV 5 in case of an accident or loss of vehicle to be then able to locate and recover the UUV 5.

The UUV 5 is preferably also equipped with an inertial navigation system allowing the UUV 5 to navigate autonomously between the docks 3 even without sending or receiving any further navigation or position data. The position date of the UUV 5 may be updated via the communication interface 11 when the UUV 5 is connected to a dock 3.

However, the installation of signal generators or transmitters on the buoys 7 and/or the docks 3, as well as for example the transmission of a system time between the buoys 7 and/or docks 3 ensuring a common system time, may assist to precisely navigate the UUV 5 between the docks 3.

### INFORMATION/CONTROL CENTRE

Optionally, the system 1 according to the present invention may comprise an information and/or control centre or station 10 which may be adapted for archiving and/or processing information collected or stored by a UUV 5 or the dock 3. Further, the centre 10 may be connected via a satellite link 20 or a direct or indirect radio connection with one or more of the buoys 7 allowing thus a direct, online or real-time access to the information stored in a dock 3 or buoy 7. In case a UUV 5 is connected via a signal or communication line with a dock 3, the centre 10 may also control directly the course of the UUV 5 (via remote control) or may allow a transfer of the monitored data, e.g. images or videos or acoustic data recorded by the UUV 5 to the centre 10. The centre 10 could be operated at least partially autonomously by a computer system or by human operators.

Data could also be transferred between a dock 3 or a buoy 7 and the centre 10 by transporting a data storage medium.

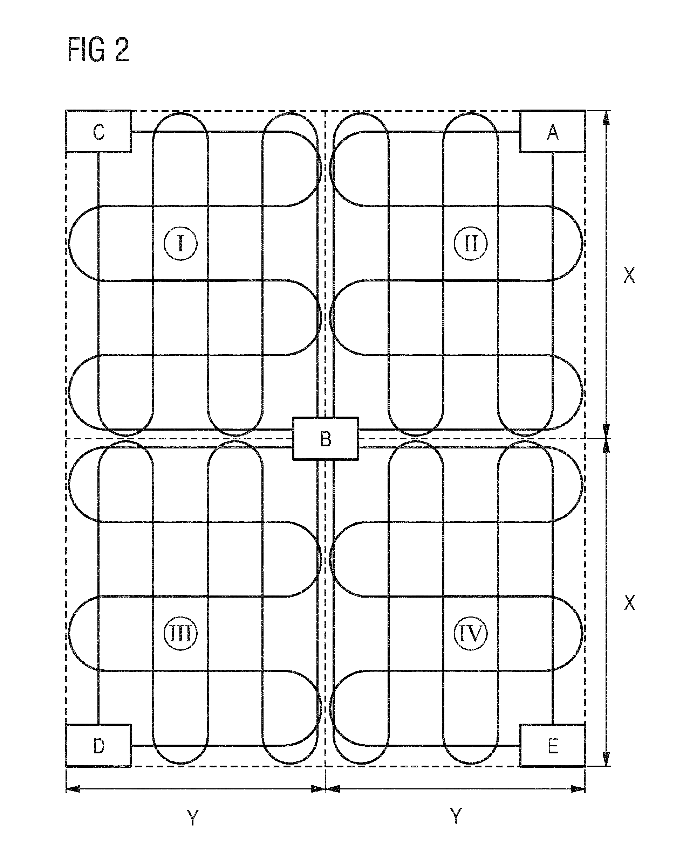

Figure 2 depicts a schematic representation of using a system according to an embodiment of the present invention, e.g. as described before in accordance with Figure 1.

The system 1 could consist of five docks 3 and five associated buoys 7 anchored to the docks 3. One buoy 7 and one dock 3 physically connected to the buoy 7 may be defined as a node of a grid. Such nodes are indicated in Figure 2 by the letters A, B, C, D and E.

Thus the shown arrangement comprises five notes A, B, C, D, E which may for example be arranged in the form of a cross. In other words, nodes A, C, D and E are arranged at the corners of a rectangle or square having the length of 2x nautical miles (NM) and the width of 2y NM. The fifth note B could be arranged in the centre of the rectangle or square.

For example x and/or y could be each between 1 and 50 such that the area covered between the arrangement of nodes may be between 4 NM² and 2500 NM².

As an example, four nodes A, C, D and E may be arranged at the corners of a square having 10 nautical miles side length and the fifth node B may be arranged in the centre of that square. Such an arrangement would then cover a total of 100 square nautical miles.

Providing a UUV 5 which can for instance operate autonomously for up to 12 hours, the UUV 5 might travel through one of the depicted areas I, II, III, or IV within less than that time from a first dock 3 to a second (neighboring) dock 3, e.g. from dock or node B to dock or node C. Then the UUV 5 could optionally exchange information at dock C via the communication interface 11 and may be refueled or recharged via supply or energy interface 13.

As an example, a UUV 5 may travel between two neighboring or adjacent docks 3 in a meander path over the seafloor. In other words the UUV 5 may scan the seafloor in essentially parallel lines or may travel over the seafloor in essentially parallel lines. At the end of each line the UUV 5 may turn (in an essentially opposite direction) and continue its path on a next line as schematically indicated in Figure 2. Preferably, each area to be monitored by a UUV 5 is monitored twice by the UUV 5: A first time by travelling in essentially parallel lines over the seafloor in a first direction and a second time by travelling again in essentially parallel lines over the seafloor, whereas the latter are essentially perpendicular to those of the first time or scan. This may increase significantly the recognition accuracy or reliability of the monitored area. The monitored area when travelling between to docks 3 may have an essentially rectangular shape or any other defined shape.

Parallel lines of the UUV's path may have a distance of between 10 m and 500 m, preferably of between 20 m and 200 m. The actual distance may be chosen in dependency of the installed system(s) for monitoring the sea and/or seafloor. Preferably, echosounders (as e.g. described above) may be used. The distance of the UUV 5 from the seafloor depends also on the actual type of used monitoring means and may, for instance, vary between 1 m and 50 m. In general the UUV 5 may travel over the seafloor or in vicinity of the seafloor.

The actual path or course of the UUV 5 may be provided by navigation information provided by the dock 3 via the communication interface 11. Otherwise, the UUV 5 may receive information via acoustic transmission from one or more buoys 7. Alternatively, a course or path may be predefined and stored in the UUV 5.

The area depicted in the example of Figure 2 with a total observation area of 100 square nautical miles could be covered by one UUV 5 in a couple of days. Increasing the number of UUV 5 may of course expedite the investigation. Further, additional UUV 5 could be used as backup or as scout which do not follow a meander path as described above. It is possible to repeat the operation after a predefined time span to discover potential changes.

In general, the distances between two installed docks 3 may be chosen depending on the maximum travel range or time of the actually chosen UUV 5 type and the chosen or assigned travel pattern of the UUV 5. It is preferred to choose distances between two docks 3 at least 10 %, preferably at least 25 % shorter than the maximum range of the UUV 5. Such a choice may allow for course deviations in case of any unexpected obstacles or additional observation or monitoring of a specific area.

An arrangement or grid comprising five nodes has been described above. Multiple of such arrangements could be combined beside one another. In particular, the outer nodes of the grid A, C, D, E may form also the outer nodes of a neighboring grid.

The disclosed system 1 might operate (autonomously) over a plurality of years.

The invention has been described with reference to best modes of carrying out the invention. Obviously, modifications and alterations will occur to others upon a reading and understanding of this specification. It is intended to include all such modifications and alterations in so far as they come within the scope of the appended claims or the equivalents thereof.

In any case the above described embodiments shall not be understood in a limiting sense. In particular, the features of the above embodiments may also be replaced or combined with one another.

**List of reference signs**

| | |
|---|---|
| 1 | system for exploring the sea and/or seafloor |
| 3 | dock |
| 5 | unmanned underwater vehicle (UUV) |
| 7 | buoy |
| 9 | fuel or energy supply |
| 10 | information or control centre |
| 11 | communication interface |
| 12 | processing unit |
| 13 | fuel or energy supply interface |
| 15 | monitoring means |
| 17 | signal line or cable |
| 20 | satellite |
| 21 | transponder / beacon |
| 23 | underwater antenna / sonar |
| A | dock / dock position |
| B | dock / dock position |
| C | dock / dock position |
| D | dock / dock position |
| E | dock / dock position |
| I | first sea / seafloor area |
| II | second sea / seafloor area |
| III | third sea / seafloor area |
| IV | fourth sea / seafloor area |
| x | length of a sea / seafloor area |
| y | width of a sea / seafloor area |

## Claims

1. A system for exploring the seafloor, comprising:
a plurality of docks (3) installable on the seafloor, each dock (3) comprising:
a first communication interface (11),
a supply interface (13) for providing fuel or energy;
a plurality of buoys (7) wherein each dock (3) of at least two docks (3) of the plurality of docks (3) is associated with one buoy (7) anchorable to that dock (3), each buoy (7) comprising:
a signal line (17) for connecting the buoy (7) to the dock (3) to which it is anchored,
a signal antenna for sending and receiving information,
wherein each buoy (7) is further adapted to send information received from the dock (3) via the signal line (17) by means of the signal antenna and adapted to transmit information received via the signal antenna to the dock (3) by means of the signal line (17); and
an unmanned underwater vehicle (5) for monitoring the sea and/or the seafloor, comprising:
a second communication interface adapted to exchange information with the first communication interface (11) of each dock (3), and
a refueling interface adapted to receive fuel or energy from the supply interface (13) of each dock (3).

2. The system according to claim 1, further comprising a processing unit (12)
for calculating a course of the unmanned underwater vehicle (5) between at least two of the docks (3), and/or
for processing information received from the unmanned underwater vehicle (5) via the first communication interface (11) or from the associated buoy (7) via the signal line (17).

3. The system according to claim 1 or 2,
wherein at least one of the docks (3), the buoys (7) and the unmanned underwater vehicle (5) comprises a transponder (21) for indicating its position; and/or
wherein at least one of the docks (3), the buoys (7) or the unmanned underwater vehicle (5) comprises a sonar or camera for surveying its surrounding sea area.

4. The system according to one of the preceding claims, wherein at least one dock (3) or the unmanned water vehicle (5) comprises an umbilical unit for connecting the supply interface (13) of said dock (3) with the refueling interface of the unmanned underwater vehicle (5) and/or for connecting the first communication interface (11) of the dock (3) with the second communication interface of the unmanned underwater vehicle (5).

5. The system according to one of the preceding claims, wherein at least one of the docks (3) is a tracked vehicle for driving on the seafloor or a ground vehicle having wheels or legs for moving on the seafloor.

6. The system according to one of claims 1 to 4, wherein the docks (3) are non-driven, stationary vessels.

7. The system according to one of the preceding claims,
wherein the system further comprises an information or control centre (10), and
wherein at least one of the buoys (7) is adapted to send information to the information or control centre (10) via one of its signal antenna and/or receive information from said centre (10) via one of its signal antenna, preferably via a satellite (20) link.

8. The system according to one of the preceding claims,
wherein a first buoy (7) associated with a first dock (3) is adapted to send information to a second buoy (7) associated with a second dock (3) so that the first dock (3) and the second dock (3) may exchange information via the first and second buoys (7).

9. A method for exploring the seafloor, preferably with the system according to one of the preceding claims, comprising the steps of:
providing a plurality of underwater docks (3) on the seafloor;
anchoring to each dock (3) a buoy (7) swimming above the dock (3);
connecting said buoy (7) via a signal line (21) with said dock (3);
providing at least one unmanned underwater vehicle (5);
monitoring the seafloor with the unmanned underwater vehicle (5);
recharging or refueling the unmanned underwater vehicle (5) at one of the docks (3); and
transferring information monitored by the unmanned underwater vehicle (5) to said dock (3).

10. The method according to claim 9, further comprising the step of:
transferring information between the buoy (7) to the dock (3) and from there to the unmanned underwater vehicle (5), wherein said information comprises navigation information for navigating the unmanned underwater vehicle (5); and/or
transferring information monitored by the unmanned underwater vehicle (5) from said dock (5) to the buoy anchored to said dock (5) and transmitting said information to an information or control centre (10).

11. The method according to claim 9 or 10, further comprising the step of:
positioning two docks (3) in a distance which is at least 10 %, preferably 25 % smaller than the maximum traveling range of the unmanned underwater vehicle (5); and/or
positioning each dock (3) such that its distance to at least one further dock (3) is at least 10 %, preferably 25 % smaller than the maximum traveling range of the unmanned underwater vehicle (5).

12. The method according to one of claims 9 to 11,
wherein the unmanned underwater vehicle (5) is connected via a communication cable with a dock (3) and is remote controlled by a control centre (10) sending navigation information to a buoy (7) anchored to that dock (3) and connected to that dock (3) via a signal line (17).

13. The method according to one of claims 9 to 12,
wherein the unmanned underwater vehicle (5) approaches the dock (3) autonomously by indicating the position of either one of the buoy (7) and the dock (3) or the unmanned underwater vehicle (5) with a transponder (21) and detecting a position signal of said transponder (21) by a corresponding receiver provided either on the unmanned underwater vehicle (5) if the dock (3) or the buoy (7) are equipped with the transponder (21) or on the dock (3) or buoy (7) if the unmanned underwater vehicle (5) is provided with the transponder (21).

14. The method according to one of claims 9 to 13,
wherein the unmanned underwater vehicle (5) travels between two docks (3) in a meander path and/or in essentially parallel lines to monitor the seafloor.

15. The method according to one of claims 9 to 14,
wherein at least five docks (3; A, B, C, D, E) are installed on the seafloor in an essentially cross-shaped configuration with four docks (3; A, C, D, E) being positioned at the corners of the cross shape and the fifth dock (3; C) positioned essentially in the centre of the cross shape.
